# EUROPEAN PATENT APPLICATION

(11) **EP 4 427 961 A1**
(43) Date of publication of application: **11.09.2024**
(21) Application number: 24161524.4
(22) Date of filing: 05.03.2024
(51) Int. Cl.: B60K 1/04

(54) **VEHICLE BODY LOWER STRUCTURE**

(30) Priority: 06.03.2023 JP 2023033800
(71) Applicant: Hino Motors, Ltd., Hino-shi, Tokyo 191-8660 (JP); TOYOTA JIDOSHA KABUSHIKI KAISHA, Toyota-shi, Aichi-ken, 471-8571 (JP)
(72) Inventor: OKO, Akinori, Tokyo, 191-8660 (JP); KOWATA, Mao, Tokyo, 191-8660 (JP); IDE, Shinnosuke, Tokyo, 191-8660 (JP); FUKAISHI, Yasushi, Tokyo, 191-8660 (JP)
(74) Representative: D Young & Co LLP

(57) **Abstract**

A vehicle body lower structure according to one aspect includes: a pair of side rails disposed apart from each other in a width direction of a vehicle and extending in a front-rear direction of the vehicle; a pair of hydrogen tanks respectively disposed outside the pair of side rails in the width direction; a pair of protection members configured to respectively protect the pair of hydrogen tanks from external impact; and a battery supported by the pair of side rails between the pair of protection members.

## Description

### TECHNICAL FIELD

The present disclosure relates to a vehicle body lower structure.

### BACKGROUND

Japanese Unexamined Patent Publication No. 2022-25814 describes a support device for supporting a battery between a pair of side rails. The support device includes a frame-side connecting portion coupled to the side rails, a protruding portion protruding outward in a vehicle width direction below the frame-side connecting portion, and an elastic coupling portion coupling the protruding portion and the battery. When an impact force is applied to a vehicle due to a side collision, the impact force is input to the protruding portion located outside in the vehicle width direction and transmitted to the side rails via the frame-side connecting portion. In this support device, the impact force from the outside is absorbed by the side rails to protect the battery from the impact.

### SUMMARY

In recent years, since a large number of electric devices have been mounted on a vehicle along with improvement of a function of the vehicle, it is required to effectively use a space around a side rail. However, in Japanese Unexamined Patent Publication No. 2022-25814, since a protection member (support device) dedicated to a battery pack is mounted in order to protect the battery pack from an external impact, the protection member may press a space around the side rail.

Therefore, an object of the present disclosure is to provide a vehicle body lower structure capable of protecting a battery from an external impact without using an individual protection member.

A vehicle body lower structure according to one aspect includes: a pair of side rails disposed apart from each other in a vehicle width direction of a vehicle and extending in a front-rear direction of the vehicle; a pair of hydrogen tanks respectively disposed outside the pair of side rails in the vehicle width direction; a pair of protection members configured to respectively protect the pair of hydrogen tanks from external impact; and a battery supported by the pair of side rails between the pair of protection members.

In the vehicle body lower structure according to the above aspect, since the battery is supported between the pair of protection members for protecting the pair of hydrogen tanks, the battery can be protected from external impact without using a protection member dedicated to the battery.

According to various embodiments of the present disclosure, the battery can be protected from external impact without using a separate protection member.

### BRIEF DESCRIPTION OF THE DRAWINGS

FIG. 1 is a plan view schematically illustrating a vehicle body lower structure according to an embodiment;
FIG. 2 is an enlarged plan view of a vehicle body lower structure around a hydrogen tank;
FIG. 3 is a schematic cross-sectional view taken along line III-III of FIG. 1; and
FIG. 4 is a perspective view illustrating a periphery of a first battery.

### DETAILED DESCRIPTION

### [Overview of Embodiments of Present Disclosure]

First, an overview of embodiments of the present disclosure will be described.

(Clause 1) Provided are: a pair of side rails disposed apart from each other in a vehicle width direction of a vehicle and extending in a front-rear direction of the vehicle; a pair of hydrogen tanks respectively disposed outside the pair of side rails in the vehicle width direction; a pair of protection members configured to respectively protect the pair of hydrogen tanks from external impact; and a battery supported by the pair of side rails between the pair of protection members. In this vehicle body lower structure, since the battery is supported between the pair of protection members for protecting the pair of hydrogen tanks, the battery can be protected from external impact without using a protection member dedicated to the battery.

(Clause 2) The vehicle body lower structure according to Clause 1 may further includes a front axle attached to a front wheel of the vehicle, a rear axle attached to a rear wheel of the vehicle, and another battery different from the battery, in which the battery may be disposed between the front axle and the rear axle, and the another battery may be disposed behind the rear axle. When the battery is disposed in front of the rear axle, a load on the front axle becomes excessive as compared with a load on the rear axle, and as a result, a decrease in traveling performance such as a decrease in brake performance may be caused. On the other hand, when the another battery is disposed behind the rear axle, the balance between the load on the front axle and the load on the rear axle can be improved.

(Clause 3) In the vehicle body lower structure according to Clause 1 or 2, at least a part of the battery may be disposed below lower ends of the pair of side rails. In this vehicle body lower structure, since the battery is supported between the pair of protection members, the battery can be protected from an impact even when at least a part of the battery is disposed below the lower ends of the pair of side rails.

(Clause 4) The vehicle body lower structure according to any one of Clauses 1 to 3 may further include a radiator disposed outside one of the pair of protection members in the vehicle width direction. In this case, since an impact from the side of the vehicle is absorbed by the radiator, the battery can be more reliably protected from the impact.

(Clause 5) In the vehicle body lower structure according to any one of Clauses 1 to 4, the battery may be a lithium ion battery. This vehicle body lower structure can protect a lithium ion battery that is weak against an impact.

### [Exemplification of Embodiments of Present Disclosure]

Hereinafter, embodiments of the present disclosure will be described with reference to the drawings. In the description of the drawings, the same elements are denoted by the same reference signs, and redundant description is omitted. The drawings may be partially simplified or exaggerated for easy understanding, and dimensional ratios, angles, and the like are not limited to those described in the drawings.

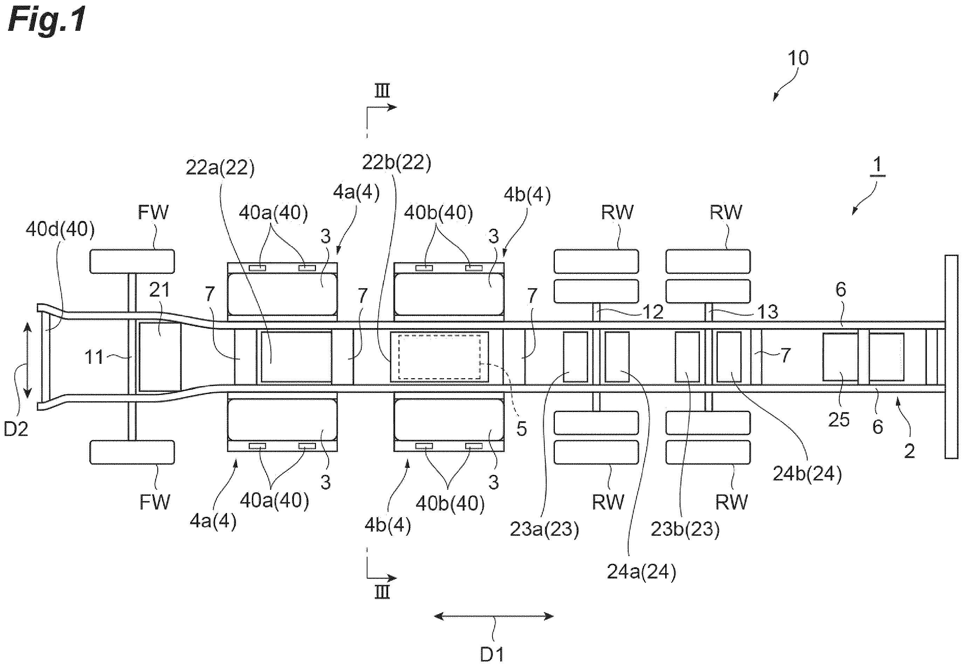

FIG. 1 is a plan view schematically illustrating a vehicle body lower structure 10 of a vehicle 1 according to an embodiment. The vehicle 1 is a large vehicle such as a truck, a cargo vehicle, or a bus vehicle, and is a fuel cell electric vehicle (FCEV) that generates power by chemically reacting hydrogen and oxygen, and travels by driving a motor with the generated power. Hereinafter, an example in which the vehicle 1 is a truck having a cab and a cargo bed will be described. In the following description, a forward direction and a backward direction of the vehicle 1 are referred to as a front-rear direction D1 of the vehicle 1, and a left-right direction when the vehicle 1 is viewed from the rear is referred to as a vehicle width direction D2.

The vehicle 1 includes a vehicle body lower structure 10 that supports a cab and a cargo bed. As illustrated in FIG. 1, the vehicle body lower structure 10 includes a frame 2, a plurality of hydrogen tanks 3, a plurality of protection members 4, and a first battery 5. The frame 2 includes a pair of side rails 6 disposed apart from each other in the vehicle width direction D2 of the vehicle 1 and extending in the front-rear direction D1 of the vehicle 1, and a plurality of cross members 7 extending in the vehicle width direction D2 of the vehicle 1 between the pair of side rails 6 and coupled to the pair of side rails 6. The frame 2 is, for example, a ladder frame. A cab in which a driver's seat of the vehicle 1 is disposed is supported on a front portion of the frame 2. A cargo bed on which a load is mounted is supported on a rear portion of the frame 2.

In one embodiment, the vehicle body lower structure 10 further includes a front axle 11, a rear axle 12 and a rear axle 13. The front axle 11 is attached to a pair of left and right front wheels FW of the vehicle 1. The rear axle 12 is attached to a pair of left and right rear wheels RW of the vehicle 1. The rear axle 13 is disposed behind the rear axle 12 and is attached to the pair of left and right rear wheels RW of the vehicle 1. The rear axle 12 and the rear axle 13 are drive shafts driven by a motor 23a and a motor 23b to be described later, respectively.

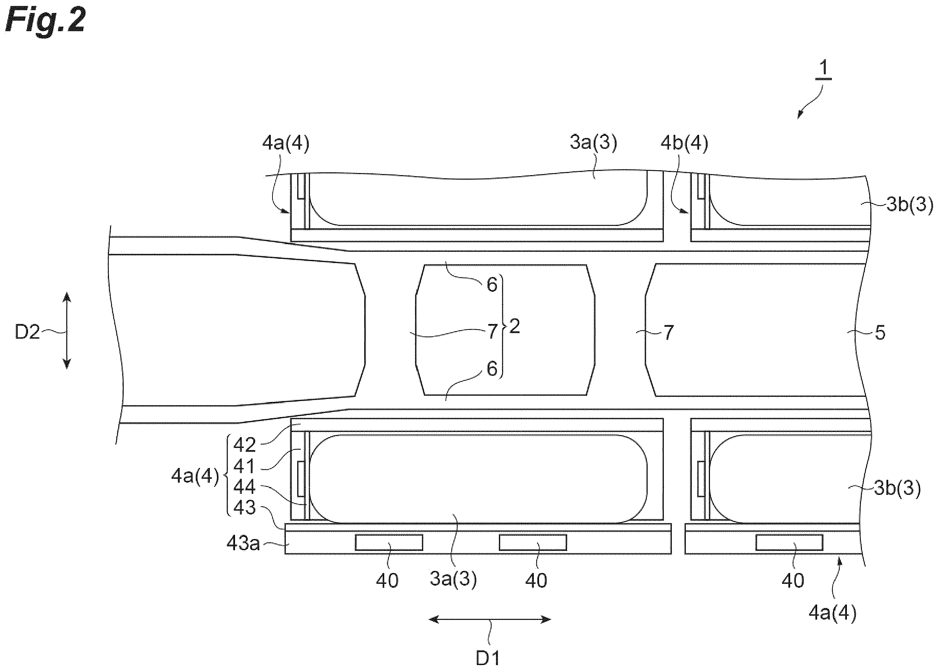

The plurality of hydrogen tanks 3 are mounted on the frame 2. FIG. 2 is an enlarged plan view of the vehicle body lower structure 10 around the hydrogen tanks 3. Note that, in FIG. 2, the electric devices mounted on the frame 2 are omitted. Each of the plurality of hydrogen tanks 3 stores hydrogen gas for power generation. The hydrogen tank 3 has a substantially cylindrical shape extending in an axial direction, and is disposed under the floor of a cargo bed of the vehicle 1 in a state where the axial direction is directed in the front-rear direction D1 of the vehicle 1.

As illustrated in FIG. 2, the plurality of hydrogen tanks 3 includes a pair of hydrogen tanks 3a and a pair of hydrogen tanks 3b. The pair of hydrogen tanks 3a is disposed outside the pair of side rails 6 so as to face each other in the vehicle width direction D2. The pair of hydrogen tanks 3b is disposed behind the pair of hydrogen tanks 3a and outside the pair of side rails 6 so as to face each other in the vehicle width direction D2. The pair of hydrogen tanks 3a and 3b is mounted on the frame 2 between the front axle 11 and the rear axle 12. In the following description, the hydrogen tanks 3a and 3b will be collectively referred to as a hydrogen tank 3 unless it is particularly necessary to distinguish them. Pipes for supplying hydrogen stored in a fuel cell stack 21 described later are connected to the plurality of hydrogen tanks 3.

As illustrated in FIG. 1, the plurality of protection members 4 are disposed outside the pair of side rails 6 in the vehicle width direction D2, and protect the plurality of hydrogen tanks 3 from external impact. The plurality of protection members 4 include a pair of protection members 4a that respectively protect the pair of hydrogen tanks 3a, and a pair of protection members 4b that respectively protect the pair of hydrogen tanks 3b. The pair of protection members 4b is disposed behind the pair of protection members 4a. In the following description, the protection members 4a and 4b will be collectively referred to as the protection member 4 unless it is particularly necessary to distinguish them.

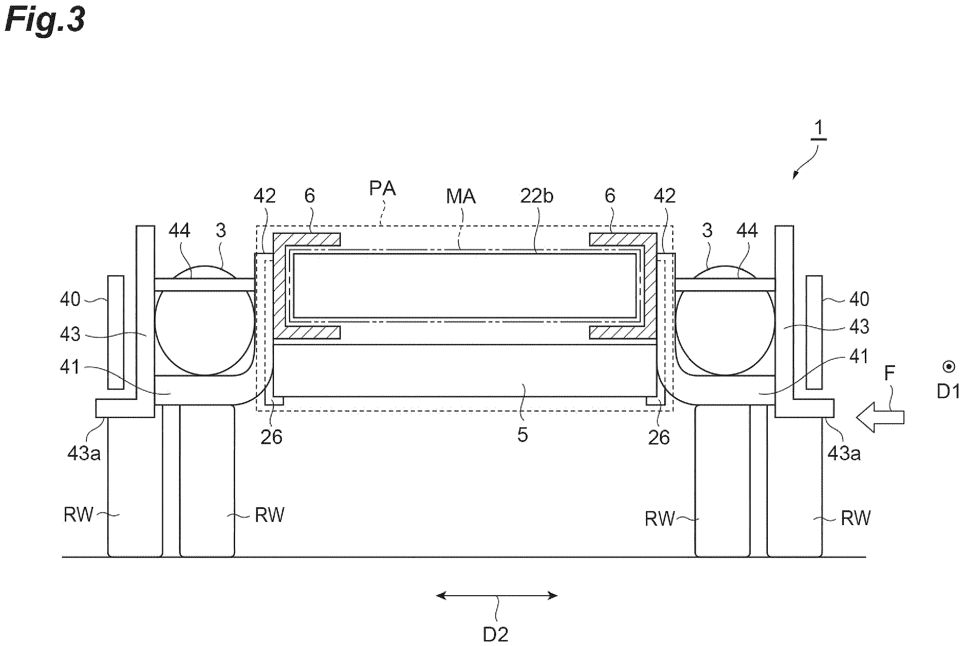

The plurality of protection members 4 protect the plurality of hydrogen tanks 3 from external impact, and function as brackets for fixing the plurality of hydrogen tanks 3 to the pair of side rails 6. The plurality of protection members 4 will be described in detail with reference to FIGS. 2 and 3. FIG. 3 is a schematic cross-sectional view taken along line III-III of FIG. 1. As illustrated in FIG. 3, the plurality of protection members 4 include a support portion 41, an inner erecting portion 42, an outer erecting portion 43, and a coupling portion 44. The support portion 41 supports each of the hydrogen tanks 3. The inner erecting portion 42 is erected from the support portion 41 and disposed inside the hydrogen tank 3 in the vehicle width direction D2. The inner erecting portions 42 are fastened to outer surfaces of the pair of side rails 6 by fasteners such as bolts.

The outer erecting portion 43 is erected from the support portion 41 and disposed outside the hydrogen tank 3 in the vehicle width direction D2. That is, the hydrogen tank 3 is disposed between the inner erecting portion 42 and the outer erecting portion 43. The outer erecting portion 43 has a substantially L-shape as viewed in the front-rear direction D1 of the vehicle 1, and a protruding portion 43a protruding outward in the vehicle width direction D2 is formed at a lower end of the outer erecting portion 43. The lower end (protruding portion 43a) of the outer erecting portion 43 is disposed below a lower end of each of the pair of side rails 6. An upper ends of the outer erecting portion 43 is disposed above an upper end of each of the pair of side rails 6.

The coupling portion 44 extends in the vehicle width direction D2 outside the hydrogen tank 3 in the axial direction, and couples an upper portion of the inner erecting portion 42 and an upper portion of the outer erecting portion 43. The coupling portion 44 is disposed at a position overlapping the hydrogen tank 3 as viewed in the front-rear direction D1, and prevents the hydrogen tank 3 from falling off from the protection member 4. The coupling portion 44 has such strength as not to be buckled and deformed when another vehicle collides with the vehicle 1 from a side surface.

As described above, since the lower end of the outer erecting portion 43 protrudes outward in the vehicle width direction D2, when another vehicle collides with the vehicle 1 from the side, an impact F from the outside is applied to the protruding portion 43a of the outer erecting portion 43 as illustrated in FIG. 3. The impact F applied to the protruding portion 43a is transmitted to the side rail 6 through the support portion 41 and the coupling portion 44. That is, the impact F from the outside is received by the protection member 4, and the impact F is prevented from being directly applied to the hydrogen tank 3. As a result, damage to the hydrogen tank 3 is prevented.

By disposing the pair of protection members 4 outside the pair of side rails 6, as illustrated in FIG. 3, a protection region PA protected from an impact F from the side is formed between the pair of protection members 4. As illustrated in FIG. 3, an area of the protection region PA when viewed from the front-rear direction D1 is larger than an area of a mounting region MA between the pair of side rails 6. As described later, the first battery 5 is disposed in the protection region PA in order to protect the first battery 5 from the impact F.

In one embodiment, the vehicle body lower structure 10 further includes a plurality of radiators 40 disposed outside the plurality of protection members 4 in the vehicle width direction D2. As illustrated in FIG. 3, the plurality of radiators 40 are supported by the outer erecting portion 43 of the protection member 4. The plurality of radiators 40 includes a pair of radiators 40a disposed outside the pair of protection members 4a in the vehicle width direction D2 and a pair of radiators 40b disposed outside the pair of protection members 4b in the vehicle width direction D2. The plurality of radiators 40 may further include a radiator 40d supported on the front portion of the frame 2. When the outside air passes through the plurality of radiators 40, the heat of the refrigerant flowing inside the radiators is dissipated to the outside air, and the refrigerant is cooled. The plurality of radiators 40 supply the cooled refrigerant to the electric devices via a refrigerant flow path to cool the electric devices.

The first battery 5 is a secondary battery such as a lithium ion battery. The first battery 5 is mounted on the frame 2 between the front axle 11 and the rear axle 12, and is supported by the pair of side rails 6 between the pair of protection members 4b. Details of the first battery 5 will be described later.

As illustrated in FIG. 1, in one embodiment, the vehicle body lower structure 10 further includes a fuel cell stack 21, high-voltage devices 22a and 22b, motors 23a and 23b, inverters 24a and 24b, and a second battery (another battery) 25. The fuel cell stack 21, the high-voltage devices 22a and 22b, the motors 23a and 23b, the inverters 24a and 24b, and the second battery 25 are electric devices for driving the vehicle 1, and are supported between the pair of side rails 6.

The fuel cell stack 21 is mounted on a front portion of the frame 2, and is disposed under a floor of the cab of the vehicle 1. The fuel cell stack 21 generates electric power for driving by chemically reacting hydrogen stored in the hydrogen tank 3 with oxygen in air. The high-voltage devices 22a and 22b, the motors 23a and 23b, the inverters 24a and 24b, and the second battery 25 are disposed at a rear portion of the frame 2 and are disposed under the floor of the cargo bed of the vehicle 1.

The high-voltage devices 22a and 22b are high-voltage auxiliary devices that operate by electric power from the first battery 5 or the second battery 25. The high-voltage device 22a includes, for example, a DC-DC converter. The DC-DC converter supplies electric power of the first battery 5 or the second battery 25 to various auxiliary devices mounted on the vehicle 1, for example. The high-voltage device 22a is disposed between the pair of protection members 4a among the plurality of protection members 4.

The high-voltage device 22b includes, for example, a brake register controller. The brake register controller controls electric power supplied to a brake register (not illustrated) that converts regenerative power generated by the motors 23a and 23b into thermal energy and consumes the thermal energy. The high-voltage device 22b is disposed between the pair of protection members 4b among the pair of protection members 4 behind the high-voltage device 22a. More specifically, as illustrated in FIG. 3, the high-voltage device 22b is disposed above the first battery 5 between the pair of protection members 4b. Hereinafter, the high-voltage devices 22a and 22b will be collectively referred to as a high-voltage device 22 unless it is particularly necessary to distinguish them.

The motors 23a and 23b are mounted on the rear portion of the frame 2 and function as an electric motor and a generator. During power running control, the motors 23a and 23b receive electric power supplied from the first battery 5 and the second battery 25, respectively, and generate power for driving the vehicle 1. On the other hand, at the time of regenerative control, the motors 23a and 23b generate load torques for regenerative power generation to generate power. The regenerative power generated by the motor 23a and the motor 23b is supplied to the first battery 5 and the second battery 25, respectively. Hereinafter, the motors 23a and 23b will be collectively referred to as the motor 23 unless it is particularly necessary to distinguish them.

The inverter 24a is electrically connected to the motor 23a and the first battery 5. The inverter 24a controls electric power supplied to the motor 23a and the first battery 5. For example, during the power running control, the inverter 24a converts DC power of the first battery 5 into AC power and supplies the AC power to the motor 23a. On the other hand, at the time of the regenerative control, the inverter 24a converts regenerative power generated by the motor 23a into DC power to charge the first battery 5.

Similarly, the inverter 24b is electrically connected to the motor 23b and the second battery 25. The inverter 24b controls electric power supplied to the motor 23b and the second battery 25. For example, during the power running control, the inverter 24b converts DC power of the second battery 25 into AC power and supplies the AC power to the motor 23b. On the other hand, at the time of the regenerative control, the inverter 24b converts regenerative power generated by the motor 23b into DC power to charge the second battery 25. Hereinafter, the inverters 24a and 24b will be collectively referred to as an inverter 24 unless it is particularly necessary to distinguish them.

The second battery 25 is a secondary battery. In one embodiment, the second battery 25 is a lithium ion battery. As described above, the first battery 5 is supported by the pair of side rails 6 between the plurality of protection members 4. The first battery 5 supplies electric power to the motor 23a to drive the motor 23a, and rotates the rear wheel RW attached to the rear axle 12.

On the other hand, the second battery 25 is disposed behind the rear axles 12 and 13 and supported between the pair of side rails 6. The second battery 25 supplies electric power to the motor 23b to drive the motor 23b, and rotates the rear wheel RW attached to the rear axle 13.

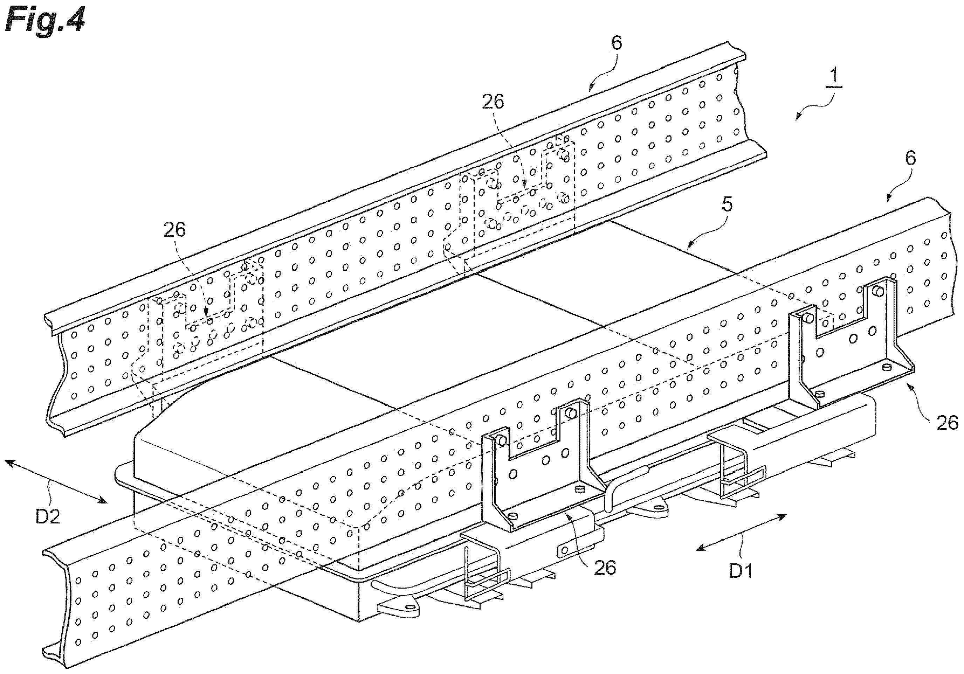

FIG. 4 is an enlarged perspective view illustrating a periphery of the first battery 5. Note that, in FIG. 4, for convenience of description, the high-voltage device 22b is omitted. As illustrated in FIG. 4, the first battery 5 is fixed to the frame 2 by a plurality of battery brackets 26. The plurality of battery brackets 26 couples the first battery 5 to the pair of side rails 6 and hold the first battery 5 under the side rails 6 in a suspended state. As a result, as illustrated in FIG. 3, a part or the whole of the first battery 5 is disposed below the mounting region MA formed between the pair of side rails 6. That is, at least a part of the first battery 5 is disposed below the lower ends of the pair of side rails 6.

Note that, in the embodiment illustrated in FIG. 3, in the protection region PA, the high-voltage device 22b is mounted in the mounting region MA between the pair of side rails 6, and the first battery 5 is mounted below the high-voltage device 22b. However, in one embodiment, a battery may be disposed in both the mounting region MA and a region below the mounting region MA. In this case, since a mounting space of the battery increases, a larger capacity battery can be mounted on the vehicle 1.

As described above, in the vehicle body lower structure 10 according to the embodiment, the first battery 5 is supported between the pair of protection members 4b for protecting the pair of hydrogen tanks 3b. Therefore, when another vehicle collides from the side of the vehicle 1, the first battery 5 is protected from impact by the pair of protection members 4b. Therefore, the first battery 5 can be protected from the external impact F without using a protection member dedicated to the first battery 5. As illustrated in FIG. 3, the first battery 5 is disposed below the lower ends of the pair of side rails 6, but since the first battery 5 is disposed in the protection region PA between the pair of protection members 4b, the first battery 5 can be protected from the external impact F. Therefore, the space around the pair of side rails 6 can be effectively used.

Furthermore, in the above embodiment, since heavy objects such as the plurality of hydrogen tanks 3, the first battery 5, and the fuel cell stack 21 are disposed in front of the rear axle 12, a load on the front axle 11 is larger than a load on the rear axle 12. When the load on the front axle 11 becomes excessive, a decrease in traveling performance such as a decrease in the loading amount and a decrease in brake performance may occur. On the other hand, in the above embodiment, since the second battery 25 is disposed behind the rear axles 12 and 13, it is possible to improve the balance between the load on the front axle 11 and the load on the rear axle 12.

Although the vehicle body lower structure according to various embodiments has been described above, various modifications can be made without being limited to the above-described embodiments and without changing the gist of the disclosure. In the above embodiment, the plurality of hydrogen tanks 3 respectively disposed on the pair of side rails 6 include the pair of hydrogen tanks 3a and the pair of hydrogen tanks 3b, but the vehicle body lower structure 10 may include at least one pair of hydrogen tanks 3.

In the above embodiment, the pair of radiators 40b is disposed outside the pair of protection members 4b in the vehicle width direction D2, but one radiator may be provided outside one of the at least pair of protection members 4b in the vehicle width direction D2.

Furthermore, in the above embodiment, the entire first battery 5 is disposed below the lower ends of the side rails 6, but at least a part of the first battery 5 may be disposed below the lower ends of the side rails 6. For example, an upper end of the first battery 5 may be located between the side rails 6, and the lower end of the first battery 5 may be located below the lower ends of the side rails 6. In this case, the first battery 5 can be increased in size as compared with a case where the first battery 5 is disposed so as to be accommodated in the mounting region MA.

In the above embodiment, the first battery 5 and the second battery 25 are lithium ion batteries, but the types of the first battery 5 and the second battery 25 are not particularly limited. The various embodiments described above can be combined as long as no contradiction occurs.

### Reference Signs List

- 1: vehicle
- 3: hydrogen tank
- 4: protection member
- 5: first battery (battery)
- 6: side rail
- 10: vehicle body lower structure
- 11: front axle
- 12, 13: rear axle
- 25: second battery (another battery)
- 40: radiator
- D1: front-rear direction
- D2: vehicle width direction (width direction)
- F: impact

## Claims

1. A vehicle body lower structure comprising:
a pair of side rails disposed apart from each other in a vehicle width direction of a vehicle and extending in a front-rear direction of the vehicle;
a pair of hydrogen tanks respectively disposed outside the pair of side rails in the vehicle width direction;
a pair of protection members configured to respectively protect the pair of hydrogen tanks from external impact; and
a battery supported by the pair of side rails between the pair of protection members.

2. The vehicle body lower structure according to claim 1, further comprising:
a front axle attached to a front wheel of the vehicle;
a rear axle attached to a rear wheel of the vehicle; and
another battery different from the battery,
wherein the battery is disposed between the front axle and the rear axle, and
the another battery is disposed behind the rear axle.

3. The vehicle body lower structure according to claim 1 or 2, wherein at least a part of the battery is disposed below lower ends of the pair of side rails.

4. The vehicle body lower structure according to claim 1 or 2, further comprising a radiator disposed outside one of the pair of protection members in the vehicle width direction.

5. The vehicle body lower structure according to claim 1 or 2, wherein the battery is a lithium ion battery.
